# EUROPEAN PATENT APPLICATION

(11) **EP 1 842 753 A1**
(43) Date of publication of application: **10.10.2007**
(21) Application number: 07105017.3
(22) Date of filing: 27.03.2007
(51) Int. Cl.: B60S 9/04

(54) **Supporting device to statically support a towable means of transport**

(30) Priority: 31.03.2006 IT UD20060084
(71) Applicant: Fermi Srl, 31100 Treviso (IT)
(72) Inventor: Fermi, Steno, 31050 Olmi di San Biagio (TV) (IT)
(74) Representative: Petraz, Gilberto Luigi

(57) **Abstract**

A supporting device (10) to support in a static position a means of transport (45), such as for example a trailer, a semi-trailer, a wagon, a caravan, or suchlike, comprises a pair of uprights (11) having a fixed element (12) and a folding element (13) and is provided with a clamping element (16) to clamp the folding element (13) in a first extended position, in which it supports the means of transport (45), or in a second folded position raised with respect to the road surface.

## Description

### FIELD OF THE INVENTION

The present invention concerns a supporting device able to support, in a static position, a means of transport, such as for example a trailer, a semi-trailer, a wagon, a caravan or suchlike. The supporting device comprises two elements, a fixed one and one able to be folded with respect to the other and is provided with a clamping element to clamp the folding element in a first extended position, in which it supports the means of transport, or in a second folded position raised with respect to the road surface.

### BACKGROUND OF THE INVENTION

Supporting devices or lifting devices are known, of the telescopic type, to support in a static position semitrailers for the road, such as for example large-size commercial trailers, when the latter are detached from their tractor. Each lifting device comprises an upper element, attached to the frame of the semi-trailer, and a lower element, articulated and rotatably folding under the loading platform of the means of transport.

One disadvantage of such known devices is the complexity of the operations to lift/lower and incline the lower element with respect to the upper element.

In fact, every time each lower element is lowered and every time it is raised, the clamping pins have to be disinserted and inserted on both sides of the semi-trailer; this operation is not always simple and in any case implies a useless waste of time for the operator.

From the application for a patent of industrial invention n° UD2004A000046 filed by the Applicant, a supporting device is also known in which the telescopic portions are moved to be raised from the ground and a cam system is achieved, which transforms the telescopic linear movement into a rotatory movement which inclines the rotatable portion at the desired height from the ground.

Moreover, known devices are very heavy and complicated to handle, and also complex to produce.

One purpose of the present invention is to achieve a device to support and lift a means of transport of the towable type which is easy to activate, even manually, by means of levers applied in suitable seatings, and without excessive effort on the part of the operator and which has great stability, great mechanical safety, according to the parameters defined by international legislation, as in the case of a heavy semi-trailer.

Another purpose of the present invention is to achieve a supporting device the mechanical embodiment of which is not complex or expensive.

The Applicant has devised, tested and embodied the present invention to overcome the shortcomings of the state of the art and to obtain these and other purposes and advantages.

### SUMMARY OF THE INVENTION

The present invention is set forth and characterized in the main claim, while the dependent claims describe other characteristics of the invention or variants to the main inventive idea.

In accordance with the above purposes, a supporting device for a means of transport comprises at least an upright, advantageously a plurality of uprights, having a first element able to be made solid with said means of transport and a second element, pivoted rotatably to said first element, so as to be rotatable between an extended position, in which said supporting device is able to support said means of transport, and a folded position, which does not interfere with the road surface when the means of transport is in motion, that is, advantageously substantially horizontal, towards the inside of the means of transport.

According to a characteristic feature of the present invention, the supporting device is equipped with at least a clamping element, able to clamp the second element at least in the extended position and the folded position.

The clamping element is rotatably pivoted to the first element, and is provided with clamping means able to interfere selectively with said second element in order to prevent it rotating, both in the extended position and also in the folded position.

In fact, the clamping element is able to rotate selectively between a clamping position, in which said clamping means is able to interfere with said second element in order to prevent it rotating, and a release position, in which said clamping means is able to allow it to rotate, and vice versa.

According to an advantageous feature of the present invention, the supporting device comprises elastic means associated with said first element of the upright and with said clamping element, said elastic means being able to condition said clamping element elastically so as to effect the return of said clamping element from said release position to said clamping position.

Advantageously, the clamping element and the second element of the upright are pivoted to the first element of the upright in different fulcrums of rotation. According to the present invention, the fulcrum of the clamping element is disposed towards the inside, that is, towards the center line of the means of transport, with respect to the fulcrum of the second rotatable element of the upright. In fact, since the uprights bend advantageously towards the inside of the means of transport, transversely to the longitudinal direction of the means of transport, the positioning of the fulcrum of the clamping element towards the inside of the means of transport allows to keep the clamping element and the second rotatable element attached, without needing other supports or portions to contrast the weight of the second rotatable element. The weight of the second rotatable element is supported by means of the coupling with interference of the clamping means with the second element.

Advantageously, the device according to the present invention is equipped with a first lever, operatively able to be associated with the second element of the upright and able to be pivoted to its fulcrum of rotation in order to rotate the second element. Furthermore, the device is provided with a second lever, able to be operatively associated with the clamping element and able to be pivoted to the fulcrum of the clamping element in order to rotate the latter.

According to another advantageous feature of the present invention, the supporting device is provided with actuation means that can be driven fluid-dynamically, and able to selectively rotate said clamping element and said second element, advantageously able to be commanded by means of a single command unit.

Advantageously, the supporting device according to the present invention is easy to drive, also manually and without excessive effort for the operator, and thanks to the rotatable clamping element, has both good stability and good mechanical safety, according to the parameters defined by international legislation, as in the case of a heavy semi-trailer.

According to another advantageous feature of the present invention, the uprights are easy to clamp, in the extended and folded positions, by means of a single operation of rotating the clamping element and the second rotatable element; in fact, the clamping element selectively clamps the second element both in the extended position and also in the folded position.

Furthermore, advantageously, the mechanical embodiment of the supporting device according to the invention is easy and economical to achieve.

According to another advantageous feature of the present invention, the supporting device comprises a pair of uprights having fixed and rotatable portions, disposed specular with respect to the center line of the base of the trailer or the means of transport, so as to keep the latter raised in a balanced manner.

Advantageously, the supporting device is equipped with a command unit with which it is possible to effect the inclination of the lower part, on which the supporting foot can be mounted, in order to dispose it in a zone below the towable means of transport, so as to prevent there being parts which knock against possible obstacles disposed in correspondence with the road surface, such as inclined ramps or suchlike.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a lateral view of a device according to the present invention in a raised position, applied to a towable means of transport attached to a tractor;
- fig. 2 is a lateral view of the device in fig. 1 in a lowered position of the relative towable means of transport;
- fig. 3 is a schematic view of the supporting device in fig. 1, in an extended position;
- fig. 4 is another schematic view of the supporting device in fig. 1, in an extended position;
- fig. 5 is a schematic view of the supporting device in fig. 1, in a folded position;
- fig. 6 is another schematic view of the supporting device in fig. 1, in a folded position;
- fig. 7 is a perspective view of a part of the device in fig. 1;
- fig. 8 is a front view of the device in fig. 1;
- fig. 9 is a section from IX to IX of fig. 8;
- fig. 10 is a front view of the device in fig. 5;
- fig. 11 is a section from XI to XI of fig. 10;
- fig. 12 is a schematic view of a variant of the device in fig. 3;
- fig. 13 is another schematic view of the device in fig. 12;
- fig. 14 is another schematic view of the device in fig. 12;
- fig. 15 is a schematic view of a variant of the device in fig. 5; and
- fig. 16 is another schematic view of the device in fig. 15.

### DETAILED DESCRIPTION OF A PREFERENTIAL FORM OF EMBODIMENT

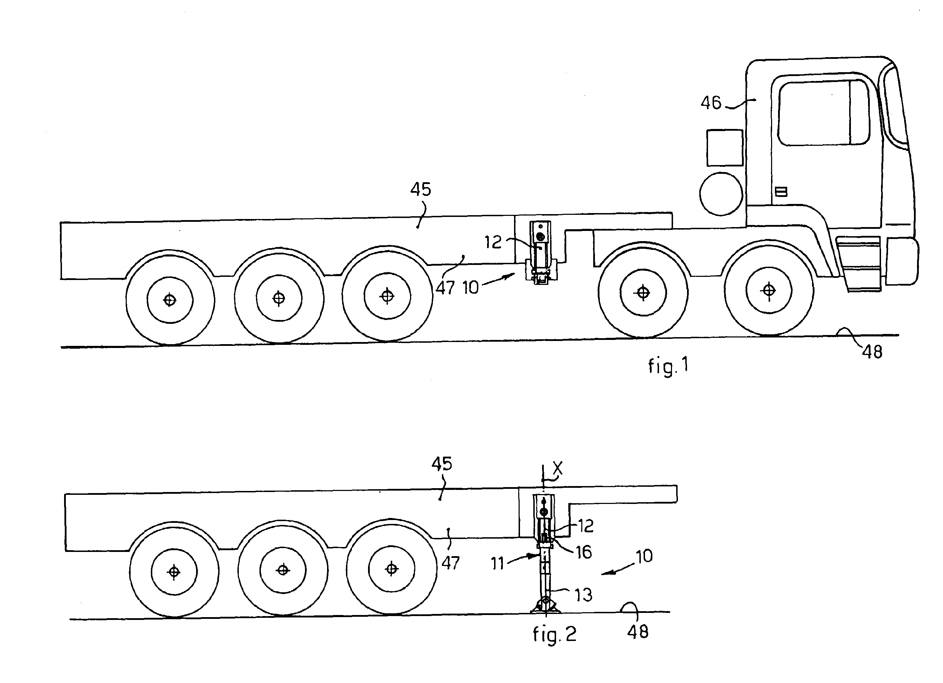

According to the present invention, in fig. 1 the number 10 denotes generally a supporting device for a means of transport 45. The supporting device 10 (figs. 1 and 2) comprises at least a pair of uprights 11, to statically support the means of transport 45, such as a semi-trailer, when made autonomous from the tractor 46.

The uprights 11 are advantageously installed on the lateral sides 47 of the semi-trailer.

Each upright 11 comprises a first element 12 able to be made solid with said means of transport and extending in a transverse direction, advantageously perpendicular, from the bottom of the means of transport 45 along an axis X (fig. 2).

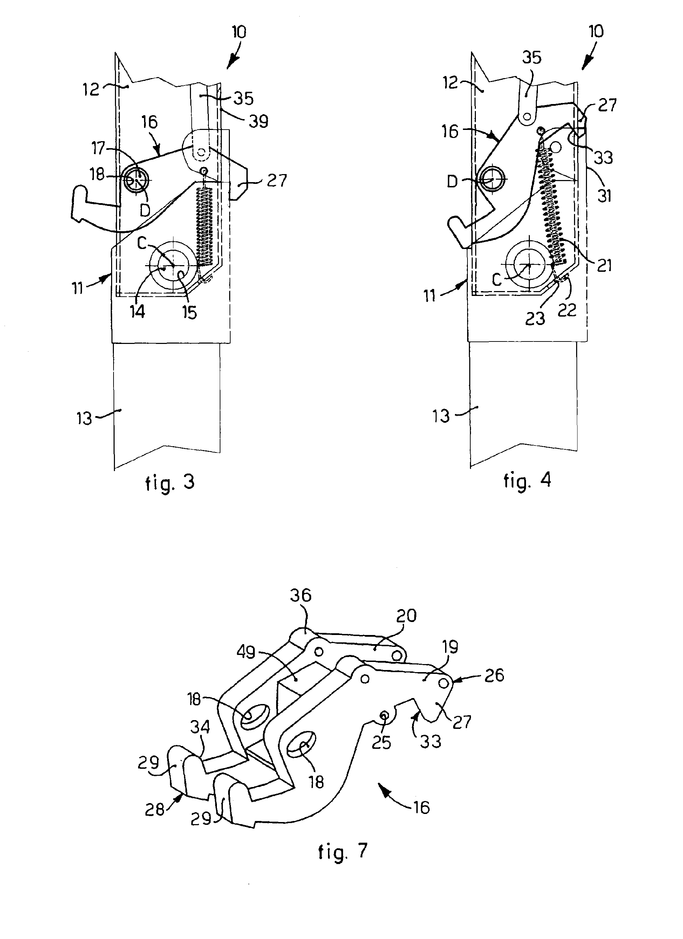

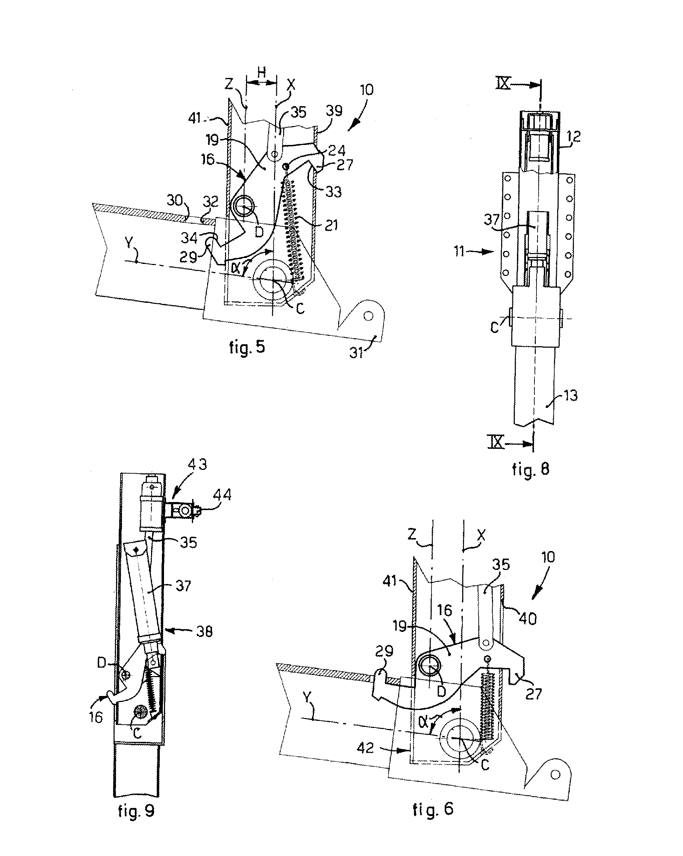

Moreover, each upright 11 is equipped with a second element 13, rotatably pivoted to the first element 12 along a first pivoting axis C (figs. 3 and 4), in order to render the second element 13 rotatable between an extended position (fig. 1), wherein it extends substantially along the axis X and is able to rest on a supporting plane in order to support the means of transport 45 in a balanced manner, and a folded position, wherein it extends along an axis Y (fig. 5), inclined with respect to the axis X, and does not interfere with the road surface 48 or supporting plane, and vice versa (fig. 1).

According to one feature of the invention, the axis Y intersects with the axis X in correspondence with the pivoting axis C and forms an acute angle α with the axis X (figs. 5 and 6).

The pivoting of the second element 13 is achieved by first pivoting means 14, passing through the pivoting axis C, such as for example a pin, screw and bolt systems and suchlike, able to cooperate with respective first through holes 15 of the first and second element 12 and 13.

According to a characteristic feature of the present invention, the supporting device 10 comprises a clamping element 16 able to rotate in order to selectively clamp the second element 13 both in the extended position (fig. 3), and also in the folded position (fig. 6).

The clamping element 16 is rotatably pivoted on the first element 12 along a second pivoting axis D, different from the first pivoting axis C and not aligned with said axis C, with respect to said axis X, and is positioned above the second element 13 (figs. 3 - 6).

The second pivoting axis D thus lies on a plane Z, said plane Z being parallel to said axis X and outside, that is, not co-planar with, said axis X (figs. 5 and 6), and is disposed at a pre-determined distance H from said longitudinal axis X.

The rotation of the clamping element 16 is allowed by second pivoting means 17 (figs. 3 and 4) passing through the pivoting axis D, such as for example a pin, screw and bolt systems and suchlike, able to cooperate with respective through holes 18 of the first element 12 and of the clamping element 16 (figs. 3 - 6).

According to the invention, the clamping element 16 is provided with clamping means and is able to selectively rotate between a clamping position, in which said clamping means is able to cooperate with said second element 13 in order to selectively prevent the rotation of said second element 13 both in the extended position and also in the folded position (figs. 3 and 6), and a release position, in which the clamping means is able to allow the rotation of the second element 13, and vice versa (figs. 3 - 6).

According to the invention, the clamping element 16 comprises a first clamping lever 19 and a second clamping lever 20, rotatable and connected by a connection element 49 (fig. 7), on which the clamping means is made.

The clamping levers 19 and 20 are provided with a first attachment end 26, which cooperates with a first abutment surface 31 of the second element 13 (fig. 3), to prevent the rotation of said second element 13 from said folded position to said extended position.

Furthermore, the clamping levers 19, 20 have a second attachment end 28, opposite the first attachment end 26 and able to cooperate with a second abutment surface 32 of the second element 13 (fig. 5), to prevent the rotation of said second element 13 from said extended position to said folded position.

Advantageously, the clamping means comprises first attachment teeth 27 disposed on the first attachment end 26, and having a first abutment counter-surface 33 (figs. 4, 5 and 7), able to cooperate in interference with said first abutment surface 31.

Furthermore, the clamping means comprises second attachment teeth 29, disposed on the second attachment end 26 and having a second abutment counter-surface 34 (fig. 7), able to cooperate in interference with the second abutment surface 32.

According to the invention, the first element 12 comprises a first side 39 (figs. 3 and 5), parallel to said axis X, in which the first abutment surface 31 is made, and a first aperture 40 (fig. 6) which allows the passage of said first attachment end 26, so that it can rotate without obstacles, in this case in a clockwise direction, in order to interfere with the first abutment surface 31 (figs. 3 and 4).

Correspondingly, the first element 12 has a second side 41 (figs. 5 and 6), opposite and parallel to said first side 39, in which a second aperture 42 is made which allows the passage of said second attachment end 28, so that it can rotate, in this case in an anti-clockwise direction, in order to interfere with the second abutment surface 32, when the second element 13 is folded.

Advantageously, the plane Z on which the second pivoting axis D lies is comprised between the second side 41 and the axis X, so that the second pivoting axis D is in an inner position, towards the center line of the means of transport 45, with respect to the first pivoting axis C.

Advantageously, the second element 13 has at least an attachment eyelet 30 (fig. 5), at least partly delimited by the second abutment surface 32, in which the second attachment teeth 29 are able to be inserted or coupled when the second element 13 is rotated in a substantially horizontal position, in order to cooperate with the second abutment surface 32.

Advantageously, since in the folded position the second element 13 forms an acute angle α with respect to the first element 12, the de-coupling of the second attachment tooth 29 from the attachment eyelet 30 is prevented in the folded position: in fact, the second abutment surface 32 is in abutment and retains the second attachment teeth 29 and therefore clamps the second element 13.

According to an advantageous feature of the present invention, the supporting device 10 comprises elastic means 21 (figs. 4 and 5), such as an elastic spring, advantageously made of harmonic steel, operatively associated with the first element 12 and the clamping element 16, in order to return the clamping element 16 automatically to the clamping position (figs. 5 and 6).

In order to connect the clamping element 16 elastically to the first element 12, the elastic means 21 has first and second attachment means 22, 24 (figs. 3 and 5), able to be attached to the respective first and second attachment hole 23, 25 of the first element 12 and of the clamping element 16 (figs. 4 and 7).

According to one embodiment of the invention, the supporting device 10 comprises a first lever 35 (figs. 9, 11 - 16), operatively connectable to the clamping element 16 in order to command the rotation of the clamping element 16, and a second lever 37 (fig. 14) operatively connectable to the second element 13 to command the rotation of the second element 13 (figs. 8 - 11 and 14 - 16).

According to one form of embodiment of the present invention, the first lever 35 is for example manually driven by an operator, and connectable to the pivoting axis D in order to cooperate with said second element 13 to make it rotate (figs. 12 - 15).

Advantageously, moreover, the second lever 37 is for example manually drivable and connectable to the first pivoting axis C, in order to rotate the clamping element 16 (fig. 16).

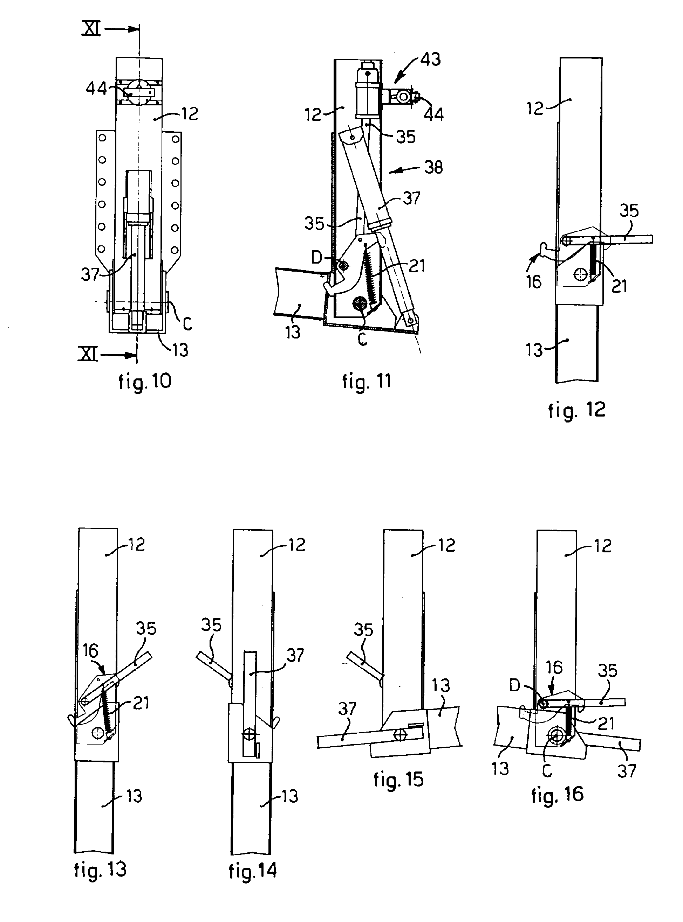

According to another form of embodiment of the present invention (figs. 9, 11), the supporting device 10 is advantageously equipped with automatic actuation means 38 to actuate the first lever 35 and the second lever 37, in order to rotate the clamping element 16 and the second element 13 selectively and synchronously, so as to obtain the clamping and release of the second element 13 as described above.

For example, the actuation means 38 is of the type with telescopic pistons, able to be driven fluid-dynamically and advantageously commanded by a command unit 43 (figs. 9 and 11), for example drivable by means of a switch 44 (figs. 9 and 10). Advantageously, when there are several pairs of uprights 11 disposed on the bottom of the means of transport 45, it is possible to command the extension and the folding of the supporting device 10 by means of one or more command units 43, which transmit the drive to the uprights 11.

It is clear that modifications and/or additions of parts may be made to the supporting device as described heretofore, without departing from the scope of the present invention.

## Claims

1. Supporting device to support statically a means of transport (45), comprising at least an upright (11) having a first element (12) able to be made solid with said means of transport (45), and a second element (13), rotatably pivoted on said first element (12) in order to be able to rotate between an extended position, wherein said second element (13) is able to statically support said means of transport (45), and a folded position which allows said means of transport (45) to move, and vice versa, **characterized in that** it also comprises a clamping element (16), pivoted on said first element (12) and provided with clamping means (27, 29) able to cooperate with said second element (13) in order to selectively clamp said second element (13) both in said extended position, and also in said folded position, said clamping element (16) being able to selectively rotate between a clamping position, wherein said clamping means (27, 29) cooperates with said second element (13) in order to prevent the rotation of said second element (13) with respect to said first element (12), and a release position, wherein said clamping means (27, 29) is released from said second element (13) in order to allow said second element (13) to rotate with respect to said first element (12), and vice versa.

2. Device as in claim 1, **characterized in that** said second element (13) has a longitudinal axis (Y) which forms an acute angle (α) with the longitudinal axis (X) of said first element (12) in said folded position.

3. Device as in claim 2, **characterized in that** the pivoting axis (D) of said clamping element (16) with respect to said first element (12) lies on a plane (Z), substantially parallel to said longitudinal axis (X) of said first element (12) and disposed at a pre-determined distance (H) from said longitudinal axis (X) of said first element (12).

4. Device as in any claim hereinbefore, **characterized in that** said clamping element (16) comprises at least a clamping lever (19, 20) provided with said clamping means (27, 29) comprising a first attachment end (26) and a second attachment end (28), opposite said first attachment end (26).

5. Device as in claim 4, **characterized in that** said second element (13) has at least a first abutment surface (31) able to cooperate with said first attachment end (26), to selectively prevent the rotation of said second element (13) from said folded position to said extended position.

6. Device as in claim 5, **characterized in that** said first attachment end (26) comprises first attachment teeth (27) able to cooperate with said first abutment surface (31).

7. Device as in any claim from 4 to 6, **characterized in that** said second element (13) has at least a second abutment surface (32), able to cooperate with said second attachment end (28) to selectively prevent the rotation of said second element (13) from said extended position to said folded position.

8. Device as in claim 7, **characterized in that** said second attachment end (28) comprises second attachment teeth (29) able to cooperate with said second abutment surface (32).

9. Device as in claim 7 or 8, **characterized in that** said first element (12) comprises:
- a first side (39), parallel to said longitudinal axis (X) of said first element (12), in which a first aperture (40) is made which allows the rotating passage of said first attachment end (26); and
- a second side (41), in which a second aperture (42) is made which allows the rotating passage of said second attachment end (28).

10. Device as in claim 9, **characterized in that** said plane (Z) is comprised between said second side (41) and said longitudinal axis (X) of said first element (12).

11. Device as in any claim hereinbefore, **characterized in that** it comprises elastic means (21) associated with said first element (12) and with said clamping element (16), able to condition said clamping element (16) elastically so as to rotate said clamping element (16) from said release position to said clamping position.

12. Device as in any claim hereinbefore, **characterized in that** it comprises a first lever (35), operatively connectable to said second element (13) in order to rotate said second element (13), and a second lever (37), operatively connectable to said clamping element (16) in order to rotate said clamping element (16).

13. Device as in claim 12, **characterized in that** it comprises actuation means (38) able to command said first lever (35) and said second lever (37) to automatically command said clamping element (16) and said second element (13).
